# EUROPÄISCHE PATENTSCHRIFT

(11) **EP 0 354 404 B1**
(45) Veröffentlichungstag und Bekanntmachung des Hinweises auf die Patenterteilung: **06.07.1994**
(21) Anmeldenummer: 89113573.3
(22) Anmeldetag: 24.07.1989
(51) Int. Cl.: C07F 9/40, C23F 11/167

(54) **Phosphorbetaine, Verfahren zu ihrer Herstellung und deren Verwendung, insbesondere für industrielle Zwecke**
Phosphorus betaines, process for their preparation and their use, particularly for industrial purposes
Bétaines phosphorées, leur procédé de préparation et leur utilisation, en particulier dans des buts industriels

(30) Priorität: 06.08.1988 DE 3826805
(43) Veröffentlichungstag der Anmeldung: 14.02.1990
(73) Patentinhaber: Th. Goldschmidt AG, 45127 Essen (DE)
(72) Erfinder: Giersberg, Joachim, D-5370 Marl-Sinsen (DE); Kollmeier, Hans-Joachim, Dr., D-4300 Essen (DE)

(56) Entgegenhaltungen:
- US-A- 4 215 064

## Beschreibung

Die Erfindung betrifft neue Phosphorbetaine und deren Herstellung. Die Erfindung betrifft ferner die Verwendung dieser neuen Phosphorbetaine als grenzflächenaktive Substanzen, insbesondere im industriellen Bereich.

Die Erfindung betrifft insbesondere neue Phosphorbetaine mit erhöhter Hydrolysebeständigkeit und ein neuartiges Verfahren, welches die Herstellung von salzfreien, insbesondere alkalisalzfreien Phosphorbetainen gestattet.

Phosphorbetaine sind aus dem Stand der Technik bekannt. Sie weisen hervorragende Schaumeigenschaften auf, sind Netz- und Reinigungsmittel, wirken antistatisch und können in zahlreichen technischen Bereichen als Emulgatoren eingesetzt werden. Sie sind ausgezeichnet hautverträglich, weisen nur geringe Bindehautreizungen im Auge auf und haben eine niedrige orale Toxizität. Sie sind deshalb in kosmetischen Zubereitungen zur Pflege von Haut und Haaren besonders geeignet.

Zum Stand der Technik ist zunächst die US-PS 4 215 064 zu nennen. Diese betrifft Phosphorbetaine der Formel 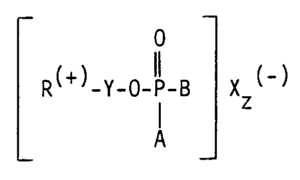
wobei
A den Rest O-, OM oder -O-Y-R⁽⁺⁾ und
B den Rest O- oder OM- bedeutet,
X⁽⁻⁾ ein Anion und
z eine ganze Zahl von 0 bis 2 ist,
mit der Maßgabe, daß nur ein Rest A oder B die Bedeutung O-haben kann und z den Wert aufweist, der zum Ladungsausgleich notwendig ist.
M ist dabei ein Wasserstoffrest, ein organischer Rest oder ein Alkali-, Erdalkali- oder Mono-, Di- oder Triethanolamin-Kation.
R ist ein Amidoaminrest.

Beispiel eines solchen Phosphorbetains ist 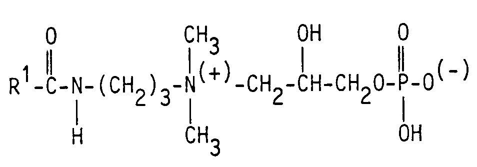
wobei R¹ ein Alkylrest mit 7 bis 17 Kohlenstoffatomen ist.

In der US-PS 4 283 542 wird die Herstellung dieser Verbindungen näher beschrieben. Nach diesem beanspruchten Verfahren wird ein Phosphatester der Formel 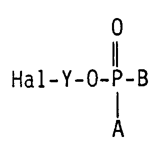
wobei Hal ein Halogenrest ist und die übrigen Reste die bereits angegebene Bedeutung haben, mit einem Amin der allgemeinen Formel 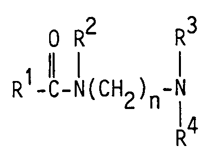
wobei
- R¹: ein Alkyl-, Alkenyl-, Alkoxy-, Hydroxyalkyl-, Aryl- oder Alkarylrest,
- R²: ein Wasserstoff-, Alkyl-, Hydroxyalkyl-, Alkenyl-, Cycloalkyl- oder Polyoxyalkylenrest ist,
- R³, R⁴: gleich oder verschieden sind und Alkyl-, Hydroxyalkyl-, Carboxyalkyl- oder Polyoxyalkylenreste bedeuten oder zusammen mit dem Stickstoffatom der tertiären Aminogruppe einen heterocyclischen Ring bilden können,
- n: eine ganze Zahl von 2 bis 12 ist,
umgesetzt.

Setzt man zum Beispiel 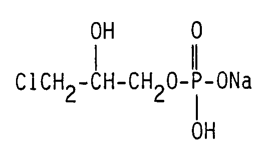
mit 3-Cocoamidopropyldimethylamin der Formel 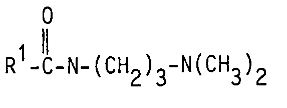
um, wobei R¹ der der Cocosfettsäure zugrunde liegende Alkylrest mit 7 bis 17 Kohlenstoffatomen ist, erhält man das Phosphorbetain der oben genannten Formel.

In der US-PS 4 231 903 werden Reinigungs- und Pflegemittel auf der Basis der vorgenannten Verbindungen beschrieben.

Ein erheblicher Nachteil dieser Verbindungen besteht jedoch darin, daß als Folge des Herstellungsprozesses die Verbindungen größere Mengen Salz in Form von Alkali-, Erdalkali- oder Aminsalz enthalten. Eine Abtrennung des Salzes ist technisch aufwendig und verteuert die Produkte. Der hohe Salzgehalt erschwert die Herstellung wasserfreier Produkte erheblich. Dieser Salzgehalt kann bei Anwendung der Phosphorbetaine im industriellen Bereich erhöhte Korrosion verursachen. Bei der Verwendung der Produkte in der Kosmetik erschwert der Salzgehalt die Konfektionierung der Produkte und kann zu Hautreizungen führen.

Ein weiterer Nachteil der vorgenannten Produkte besteht in ihrer Hydrolyseanfälligkeit. Die Hydrolyse tritt dabei an der C-O-P-Brücke auf: 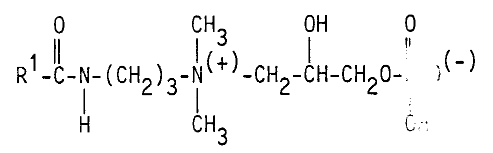
und führt zur Abspaltung der Phosphatgruppe.

Die DE-OS 22 60 326 betrifft zwitterionische Phosphorverbindungen der allgemeinen Formel 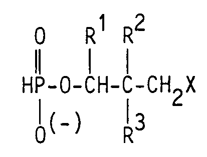
in der
- R¹: Wasserstoff oder die Methylgruppe,
- R², R³: Wasserstoff- oder Alkylreste mit 1 bis 4 Kohlenstoffatomen, die gleich oder verschieden sein können,
- X: eine Ammoniumgruppe der allgemeinen Formel R⁽⁺⁾-R⁴R⁵R⁶ bedeuten, in der
- R⁴: ein Wasserstoff-, Alkyl- oder Alkenylrest mit 1 bis 12 Kohlenstoffatomen oder ein -(CₙH₂ₙO)_{z}H-Rest, wobei n = 2 oder 3 und die Summe aller Werte von z 1 bis 50 bedeutet,
- R⁵: ein Wasserstoff-, Alkyl- oder Alkenylrest mit 1 bis 20 Kohlenstoffatomen oder ein -(CₙH₂ₙO)_{z}H-Rest und
- R⁶: ein Alkyl- oder Alkenylrest mit 1 bis 20 Kohlenstoffatomen oder ein -(CₙH₂ₙO)_{z}H-Rest ist, wobei die Reste R⁵ und R⁶ zusammen mit dem Stickstoffatom auch einen Piperidin-, Morpholin-, Imidazol- oder Imidazolinring bilden können.

Die Verbindungen können dadurch hergestellt werden, daß man ein cyclisches Phosphit der allgemeinen Formel 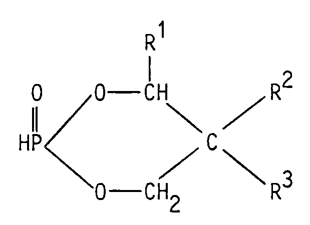
wobei R¹, R² und R³ die bereits angegebene Bedeutung haben, bei erhöhter Temperatur mit einem primären, sekundären oder tertiären Amin der Formel

NR⁴R⁵R⁶

reagieren läßt, wobei R⁴, R⁵ und R⁶ die bereits angegebene Bedeutung haben. Die Umsetzung wird vorzugsweise bei Temperaturen von 60 bis 150°C und in Gegenwart eines polaren Lösungsmittels durchgeführt.

Beispiel einer beanspruchten Verbindung ist 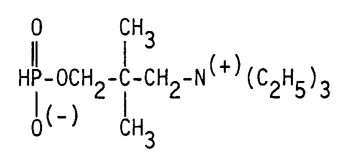
Das Verfahren der vorgenannten DE-OS 22 60 326 ermöglicht die Herstellung salzfreier Phosphorbetaine. Jedoch enthalten auch diese Verbindungen das hydrolyseanfällige -C-O-P-Brückenglied.

Der Erfindung liegt die Aufgabe zugrunde, Phosphorbetaine zu entwikkeln, welche bei Erhalt der guten grenzflächenaktiven Eigenschaften hydrolysestabil sind und bei deren Herstellung kein Alkali-, Erdalkali- oder Aminsalz anfällt. Die neuen Phosphorbetaine sollen Affinität zu polaren Oberflächen, wie Metalloberflächen oder Glasoberflächen, und zu Textilfasern oder daraus hergestellten Produkten aufweisen.

Diese Aufgabe wird entsprechend der vorliegenden Erfindung erfüllt durch die Bereitstellung neuer Phosphorbetaine der allgemeinen Formel 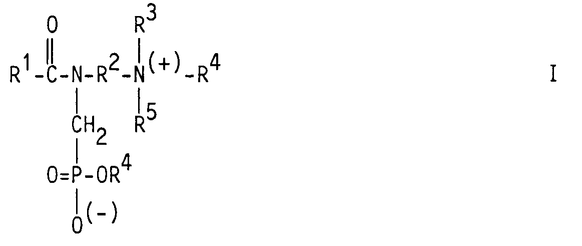
wobei
- R¹: ein gegebenenfalls OH-substituierter Alkylrest mit 1 bis 20 Kohlenstoffatomen oder der Rest 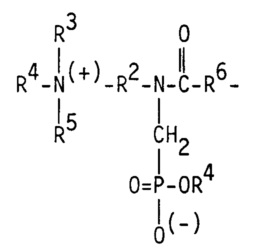 ist,
wobei R⁶ ein gegebenenfalls OH-substituierter zweiwertiger Alkylenrest mit 1 bis 10 Kohlenstoffatomen ist,
- R²: ein zweiwertiger Kohlenwasserstoffrest mit 2 bis 10 Kohlenstoffatomen, dessen Kette durch ein oder mehrere Stickstoffatome unterbrochen sein kann, ist,
- R³, R⁵: gleich oder verschieden sind und Alkylreste mit bis zu 20 Kohlenstoffatomen oder Benzylreste bedeuten und
- R⁴: ein Alkylrest mit 1 bis 4 Kohlenstoffatomen ist.

Als Reste R¹ sind Alkylreste bevorzugt, die sich von einer natürlich vorkommenden Fettsäure oder einem Fettsäuregemisch mit im Mittel 10 bis 20 Kohlenstoffatomen ableiten. Beispiele solcher Fettalkylreste sind die Lauryl-, Palmityl-, Stearyl- und Oleylreste. R¹ kann auch die Bedeutung eines OH-substituierten Alkylrestes mit 1 bis 20 Kohlenstoffatomen haben. Beispiele solcher Reste sind die Reste
HO-CH₂- , 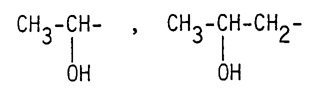
und 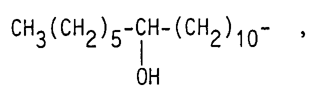
die sich von der Glykol-, Milch-, 3-Hydroxybutter- und 12-Hydroxystearinsäure ableiten.

Leiten sich die erfindungsgemäßen neuen Phosphorbetaine von aliphatischen Dicarbonsäuren ab, sind als Dicarbonsäuren solche mit 2 bis 6 Kohlenstoffatomen im Alkylenrest R⁶ bevorzugt.

Die Reste R¹ und R⁶ können geradkettig oder verzweigt sein, jedoch sind die geradkettigen Reste bevorzugt.

R² ist ein zweiwertiger Kohlenwasserstoffrest mit 2 bis 10 Kohlenstoffatomen, vorzugsweise ein zweiwertiger aliphatischer Kohlenwasserstoffrest, wie z.B. der Rest

-(CH₂)₃-, -(CH₂)₆- oder -(CH₂)₁₀- .

Die Kette des zweiwertigen Kohlenwasserstoffrestes kann durch ein oder mehrere Stickstoffatome unterbrochen sein. Dies ist z.B. bei folgenden Resten der Fall:

-(CH₂)₃-NR⁸-(CH₂)₃- , -(CH₂)₂-NR⁸-(CH₂)₂-NR⁸-(CH₂)₂- .

R⁸ ist dabei ein vorzugsweise niederer Alkylrest mit 1 bis 4 Kohlenstoffatomen.

R³ und R⁵ können gleich oder verschieden sein. Sie bedeuten Alkylreste mit bis zu 20 Kohlenstoffatomen oder Benzylreste, wobei Alkylreste, insbesondere niedere Alkylreste mit 1 bis 4 Kohlenstoffatomen, bevorzugt sind.

R⁴ ist ein Alkylrest mit 1 bis 4 Kohlenstoffatomen, wobei die Methyl- und Ethylreste bevorzugt sind.

Beispiele erfindungsgemäßer Phosphorbetaine sind 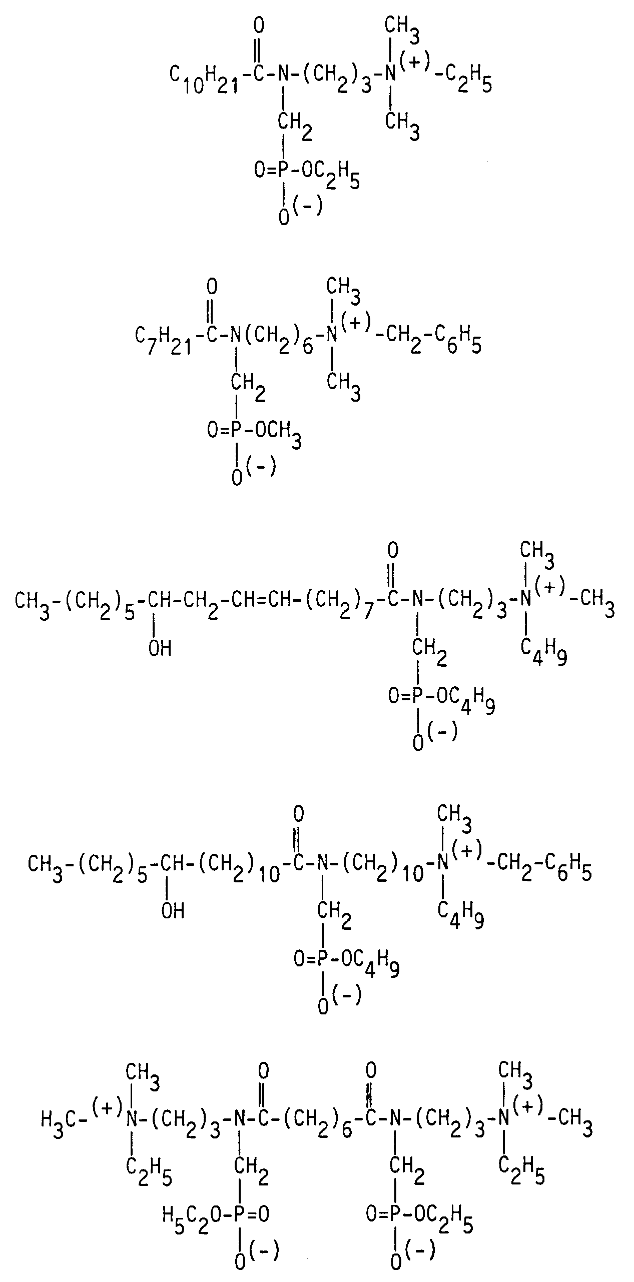
Ein weiterer Gegenstand der Erfindung besteht in einem Verfahren zur Herstellung der erfindungsgemäßen Phosphorbetaine, welches in einfacher Weise und mit hoher Ausbeute durchgeführt werden kann und bei dem keine anorganischen Salze oder Aminsalze als Nebenprodukte entstehen.

Das erfindungsgemäße Verfahren ist dadurch gekennzeichnet, daß man Verbindungen der allgemeinen Formel 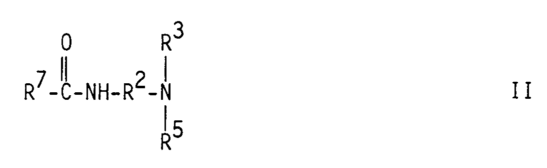
wobei R², R³ und R⁵ die bereits angegebene Bedeutung haben und R⁷ ein gegebenenfalls OH-substituierter Alkylrest mit 1-20 Kohlenstoffatomen oder der Rest 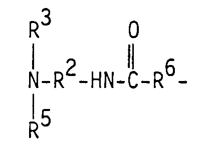
ist,
wobei R⁶ die bereits angegebene Bedeutung hat,
und, bezogen auf tertiäre Aminogruppen, mindestens äquimolare Mengen einer Verbindung der allgemeinen Formel 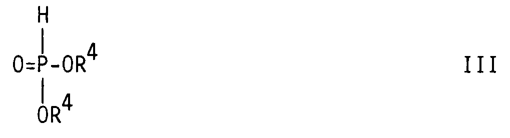
in einem polaren Lösungsmittel löst, zu der Lösung, bezogen auf tertiäre Aminogruppen, 1,5- bis 2molare Mengen Formaldehyd langsam zugibt, das Reaktionsgemisch bei Temperaturen von etwa 60 bis 140°C reagieren läßt, das entstehende Wasser in an sich bekannter Weise abtrennt und nach beendeter Reaktion überschüssige Mengen des Phosphorigsäureesters und des Formaldehyds, sowie gegebenenfalls das Lösungsmittel, vorzugsweise bei vermindertem Druck, durch Destillation entfernt.

Als polares Lösungsmittel können niedere aliphatische Alkohole, insbesondere Ethanol oder Isopropanol, oder Ether, wie Tetrahydrofuran oder Dioxan oder ein Gemisch dieser Lösungsmittel verwendet werden.

In den Formeln II und III haben die Reste R², R³, R⁴, R⁵, R⁶ die bereits angegebene Bedeutung. Der Rest R⁷ ist dem Rest R¹ analog definiert.

Die Reaktion des Amidamins der Formel II mit dem Ester der phosphorigen Säure der Formel III und Formaldehyd verläuft in einer Stufe und führt in überraschender Weise direkt zum gewünschten Betain. Die Reaktion kann mit einer Mannich-Reaktion verglichen werden, sie ist aber in dieser Form noch nicht beschrieben worden. Dabei ist insbesondere die spontane Quaternierung des tertiären Stickstoffatoms unter Bildung der Betainstruktur für den Fachmann überraschend.

Je Mol tertiärer Aminogruppe im Amidamin der Formel II setzt man mindestens ein Mol des Phosphorigsäureesters der Formel III ein. Vorzugsweise verwendet man einen geringen Überschuß, zum Beispiel etwa 1,1 bis 1,2 Mol des Phosphorigsäureesters.

Der Formaldehyd wird in Mengen von etwa 1,5 bis 2 Mol, bezogen auf tertiäre Aminogruppen im Amidamin der Formel III, zum Reaktionsgemisch gegeben. Es hat sich dabei als sehr vorteilhaft gezeigt, das Amidamin und den Phosphorigsäureester in dem polaren Lösungsmittel vorzulegen und beide Verbindungen im Lösungsmittel zu lösen. Diesem Reaktionsgemisch wird dann der Formaldehyd, meist als Lösung in Ethanol oder Butanol, zugesetzt. Die Reaktion setzt bereits bei niedrigen Temperaturen ein und läuft unter Rückflußbedingungen in etwa zwei bis fünf Stunden ab.

Die Reaktionstemperatur liegt in einem Bereich von etwa 60 bis 140°C. Vorzugsweise führt man die Reaktion bei einer Temperatur von etwa 100 bis 120°C, insbesondere unter Rückflußbedingungen, durch.

Nach Beendigung der Reaktion werden gegebenenfalls überschüssige Anteile der Reaktionspartner vom Phosphorbetain abgetrennt. Dies kann insbesondere durch Destillation erfolgen.

Ein weiterer Gegenstand der Erfindung ist die Verwendung der erfindungsgemäßen neuen Phosphorbetaine als grenzflächenaktive Substanzen, vorzugsweise zur Behandlung von polaren Oberflächen im industriellen Bereich.

So sind die erfindungsgemäßen Phosphorbetaine zur Reinigung und Entfettung von Metallteilen, als Emulgatoren zur Herstellung von Schneid- und Bohremulsionen und als hydrolysestabile Netzmittel in der Galvanik besonders vorteilhaft zu verwenden. Die Phosphorbetaine schützen Metalloberflächen zumindest temporär vor Oxidation.

Aufgrund ihrer guten Haftung auf polaren Oberflächen können die Phosphorbetaine zum Ausrüsten von Textilfasern oder Textilfaserprodukten eingesetzt werden. Sie verleihen den textilen Produkten gute Antistatik.

Die erfindungsgemäßen Phosphorbetaine sind auch zur Behandlung von Materialien aus Glas geeignet. Sie können bei der sogenannten Kaltendvergütung von Glasbehältern, insbesondere Mehrwegflaschen, zur Verminderung des Abriebs und zur Avivierung von Glasfasern verwendet werden.

Eine weitere Verwendungsmöglichkeit der Phosphorbetaine besteht in ihrer Eignung als Dispergiermittel, zum Beispiel zur Dispergierung von Pigmenten in Farben und Anstrichmitteln.

Die Verbindungen sind ausgezeichnete Netzmittel. Sie können aufgrund ihrer Betainstruktur mit anion- oder kationaktiven Tensiden oder nichtionogenen Tensiden kombiniert werden. Die Verbindungen sind hydrolysestabil, so daß bei der Lagerung ihrer wäßrigen Zubereitungsformen keine Ausscheidungen zu beobachten sind.

Bei sorgfältiger Entfernung des nach der Reaktion verbliebenen Formaldehyds können die erfindungsgemäßen neuen Phosphorbetaine mit ausgezeichnetem Erfolg auch in der Kosmetik eingesetzt werden. Die Produkte können als Haarwasch- und Pflegemittel eingesetzt werden. Sie weisen eine gewisse Substantivität auf den Haaren auf, ohne sich bei mehrmaliger Anwendung auf dem Haar aufzubauen und dieses zu verkleben. Das behandelte Haar ist geschmeidig und gut frisierbar.

In Hautpflegepräparaten können die Phosphorbetaine insbesondere als milde Reinigungs- und Pflegemittel eingesetzt werden.

Die Gegenstände vorliegender Erfindung werden an Hand der folgenden Beispiele noch näher erläutert.

### Beispiel 1

### Reaktionspartner:

- Amidamin:: 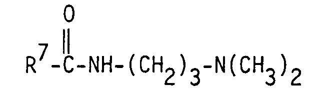 R⁷ = -C₁₁-H₂₃
- P-Ester::

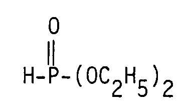

### Paraformaldehyd

0,5 Mol = 142,5g des Amidamins werden in einem 500-ml-Kolben mit Rückflußkühler vorgelegt. Bei Raumtemperatur werden nun 1 Mol = 30,03 g Paraformaldehyd zugegeben. Die Mischung wird auf 75°C aufgeheizt. Bei dieser Temperatur läßt man eine Stunde rühren. Innerhalb von 20 Minuten werden nun 0,55 Mol = 75,96 g Diethylphosphit und 250 ml Xylol zugetropft. Die Reaktionstemperatur wird bis auf 120°C erhöht. Dabei wird bei leichtem Vakuum das Reaktionswasser azeotrop abdestilliert. Man läßt dann noch 2 Stunden bei 120°C nachreagieren. Die nicht umgesetzten Reaktionskomponenten und das Xylol werden nun durch Anlegen eines Vakuums von 50 mbar abdestilliert. Es verbleibt eine viskose Flüssigkeit, welche schwach gelb gefärbt ist. Die Ausbeute beträgt 98,7 % der Theorie.

### Beispiel 2

### Reaktionspartner:

- Amidamin:: 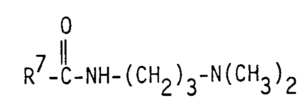 R⁷ = von der Ricinusfettsäure abgeleiteter Alkylrest
- P-Ester::

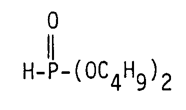

### Paraformaldehyd, 30 gew.-%ig in Butanol gelöst

1 Mol = 382,6 g des Amidamins wird, in 400 ml Butanol gelöst, in einem 1-l-Kolben mit Rückflußkühler vorgelegt. Es werden nun 2 Mol der Formaldehydlösung im Laufe von 40 Minuten zugetropft. Das Reaktionsgemisch wird nun auf 75°C aufgeheizt und 1 Stunde gerührt. Nun werden 100 g wasserfreies Natriumsulfat zugegeben und 1 Mol = 194,2 g Dibutylphosphit zugetropft. Anschließend wird auf 85°C erhitzt. Man läßt 2,5 Stunden nachreagieren. Das Natriumsulfat wird abfiltriert und die Reaktionsmischung bei 125°C 3 Stunden gerührt. Dann wird das Lösungsmittel unter Normaldruck abdestilliert. Es verbleibt eine hochviskose goldgelbe Flüssigkeit. Die Ausbeute beträgt 94,8 % der Theorie.

### Beispiel 3

### Reaktionspartner:

- Amidamin:: 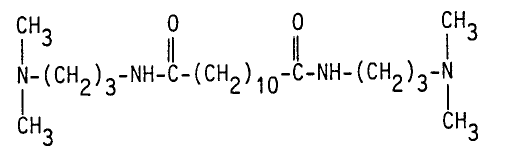
- P-Ester::

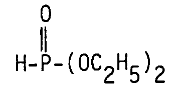

### Paraformaldehyd, 35 gew.-%ig in Ethanol

0,25 Mol = 99,66 g des Amidamins und 0,5 Mol = 69,05 g des Phosphorigsäureesters werden in 150 g Ethanol gelöst und in einen 500-ml-Kolben mit Rückflußkühler gegeben. Bei einer Kolbeninnentemperatur von 70°C wird 1 Mol = 100,09 g einer 30 gew.-%igen Formaldehydlösung in Ethanol zugetropft. Das Reaktionsgemisch wird auf Rückflußtemperatur erhitzt und bei dieser Temperatur 5 Stunden belassen. Überschüssiges Formaldehyd und Ethanol werden durch Destillation und Einleitung von Argon entfernt. Man erhält ein schwach gelbes hochviskoses Produkt mit einer Ausbeute von 89,2 % der Theorie.

### Beispiel 4

### Reaktionspartner:

- Amidamin:: 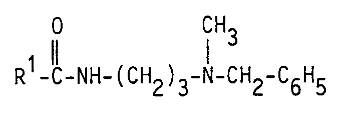 R¹ = von der Ricinusfettsäure abgeleiteter Alkylrest
- P-Ester::

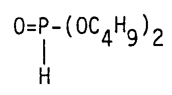

### Paraformaldehyd, 30 gew.-%ig in Butanol

Es wird das Verfahren des Beispiels 2 wiederholt, wobei für den Reaktionsansatz folgende Mengen verwendet werden:
1 Mol = 453,7 g Amidamin
1 Mol = 194,2 g Dibutylphosphit
2 Mol = 200,2 g Formaldehyd, 30 gew.-%ig in Butanol
Die Ausbeute beträgt 92,4 % der Theorie.

### Anwendungstechnische Eigenschaften der erfindungsgemäßen Verbindungen

Die nach Beispiel 1 erhaltene Verbindung wird in einer Menge von 0,5 Gew.-% in destilliertem Wasser gelöst. Die Oberflächenspannung wird nach der Methode von de Nuoy (Ringabreißmethode) bestimmt. Der Mittelwert aus 10 Messungen beträgt 28,8 mN/m.

Die Prüfung auf Korrosionsschutz wird nach DIN 51360 durchgeführt. Es ergibt sich ein Wert der Stufe 1 bis 2, während übliche, phosphorfreie Betaine des Handels einen Wert der Stufe 4 bis 5 haben. Die erfindungsgemäßen Verbindungen verursachen somit keine Korrosion und können deshalb als Netzmittel bei der Metallbearbeitung eingesetzt werden.

Mischungen von erfindungsgemäßen Betainen mit Stearinsäuremono-/diglyceriden im Gewichtsverhältnis 3 : 7 bis 7 : 3 zeigen sehr gute Emulgierwirkung. Setzt man eine solche Mischung in einer Menge von etwa 10 bis 20 Gew.-% Testbenzin zu, wird dieses selbstemulgierbar. Die erhaltenen Emulsionen weisen hohe Stabilität auf. Die Emulsionen verhalten sich beim Korrosionstest nach DIN 51360 wie die erfindungsgemäßen Verbindungen selbst und verursachen praktisch keine Korrosion.

## Patentansprüche (Patentansprüche für folgende(n) Vertragsstaat(en): AT, BE, CH, DE, FR, GB, IT, LI, NL)

1. Phosphorbetain, gekennzeichnet durch die allgemeine Formel 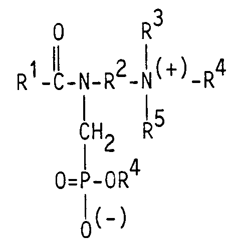 wobei
R¹ ein gegebenenfalls OH-substituierter Alkylrest mit 1 bis 20 Kohlenstoffatomen oder der Rest 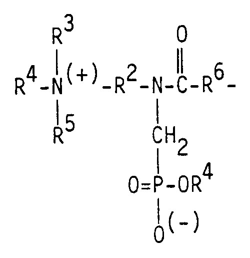 ist,
wobei R⁶ ein gegebenenfalls OH-substituierter zweiwertiger Alkylenrest mit 1 bis 10 Kohlenstoffatomen ist,
R² ein zweiwertiger Kohlenwasserstoffrest mit 2 bis 10 Kohlenstoffatomen, dessen Kette durch ein oder mehrere Stickstoffatome unterbrochen sein kann, ist,
R³, R⁵ gleich oder verschieden sind und Alkylreste mit bis zu 20 Kohlenstoffatomen oder Benzylreste bedeuten und
R⁴ ein Alkylrest mit 1 bis 4 Kohlenstoffatomen ist.

2. Phosphorbetain nach Anspruch 1, dadurch gekennzeichnet, daß R¹ ein von einer natürlichen Fettsäure oder einem Gemisch natürlicher Fettsäuren mit im Mittel 10 bis 20 Kohlenstoffatomen abgeleiteter Alkylrest ist,
R³ und R⁵ Alkylreste sind und
R⁴ ein Ethylrest ist.

3. Verfahren zur Herstellung von Phosphorbetainen nach Anspruch 1 oder 2, dadurch gekennzeichnet, daß man Verbindungen der allgemeinen Formel 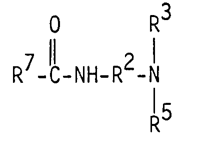 wobei R², R³ und R⁵ die bereits angegebene Bedeutung haben und R⁷ ein gegebenenfalls 0H-substituierter Alkylrest mit 1 bis 20 Kohlenstoffatomen oder der Rest 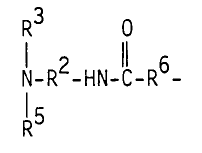 ist,
wobei R⁶ die bereits angegebene Bedeutung hat,
und, bezogen auf tertiäre Aminogruppen, mindestens äquimolare Mengen einer Verbindung der allgemeinen Formel 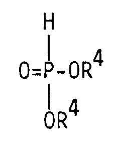 in einem polaren Lösungsmittel löst oder dispergiert, zu der Lösung oder Dispersion, bezogen auf tertiäre Aminogruppen, 1,5- bis 2molare Mengen Formaldehyd langsam zugibt, das Reaktionsgemisch bei Temperaturen von etwa 60 bis 140°C reagieren läßt, das entstehende Wasser in an sich bekannter Weise abtrennt und nach beendeter Reaktion überschüssige Mengen des Phosphorigsäureesters und des Formaldehyds, sowie gegebenenfalls das Lösungsmittel, vorzugsweise bei vermindertem Druck, durch Destillation entfernt.

4. Verwendung der Phosphorbetaine nach Anspruch 1 als grenzflächenaktive Substanzen, vorzugsweise zur Behandlung von polaren Oberflächen im industriellen Bereich.

## Patentansprüche (Patentansprüche für folgende(n) Vertragsstaat(en): ES)

1. Verfahren zur Herstellung von Phosphorbetainen der allgemeinen Formel 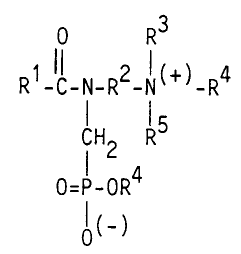 wobei
R¹ ein gegebenenfalls OH-substituierter Alkylrest mit 1 bis 20 Kohlenstoffatomen oder der Rest 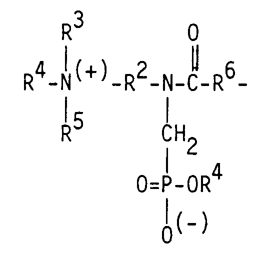 ist,
wobei R⁶ ein gegebenenfalls OH-substituierter zweiwertiger Alkylenrest mit 1 bis 10 Kohlenstoffatomen ist,
R² ein zweiwertiger Kohlenwasserstoffrest mit 2 bis 10 Kohlenstoffatomen, dessen Kette durch ein oder mehrere Stickstoffatome unterbrochen sein kann, ist,
R³, R⁵ gleich oder verschieden sind und Alkylreste mit bis zu 20 Kohlenstoffatomen oder Benzylreste bedeuten und
R⁴ ein Alkylrest mit 1 bis 4 Kohlenstoffatomen ist,
dadurch gekennzeichnet, daß man Verbindungen der allgemeinen Formel 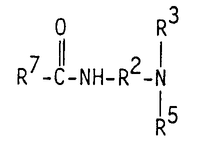 wobei R², R³ und R⁵ die bereits angegebene Bedeutung haben und R⁷ ein gegebenenfalls OH-substituierter Alkylrest mit 1 bis 20 Kohlenstoffatomen oder der Rest 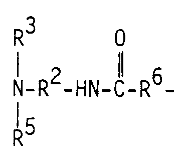 ist,
wobei R⁶ die bereits angegebene Bedeutung hat,
und, bezogen auf tertiäre Aminogruppen, mindestens äquimolare Mengen einer Verbindung der allgemeinen Formel 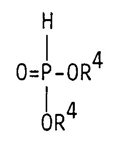 in einem polaren Lösungsmittel löst oder dispergiert, zu der Lösung oder Dispersion, bezogen auf tertiäre Aminogruppen, 1,5- bis 2molare Mengen Formaldehyd langsam zugibt, das Reaktionsgemisch bei Temperaturen von etwa 60 bis 140°C reagieren läßt, das entstehende Wasser in an sich bekannter Weise abtrennt und nach beendeter Reaktion überschüssige Mengen des Phosphorigsäureesters und des Formaldehyds, sowie gegebenenfalls das Lösungsmittel, vorzugsweise bei vermindertem Druck, durch Destillation entfernt.

2. Verfahren nach Anspruch 1, dadurch gekennzeichnet, daß man Verbindungen umsetzt, bei denen R⁷ ein von einer natürlichen Fettsäure oder einem Gemisch natürlicher Fettsäuren mit im Mittel 10 bis 20 Kohlenstoffatomen abgeleiteter Alkylrest ist, R³ und R⁵ Alkylreste sind und R⁴ ein Ethylrest ist.

3. Verwendung der nach Anspruch 1 oder 2 hergestellten Phosphorbetaine als grenzflächenaktive Substanzen, vorzugsweise zur Behandlung von polaren Oberflächen im industriellen Bereich.

## Claims (Claims for the following Contracting State(s): AT, BE, CH, DE, FR, GB, IT, LI, NL)

1. Phosphorus betaine, characterized by the general formula 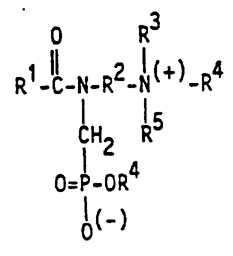 where
R¹ is an optionally OH-substituted alkyl radical having 1 to 20 carbon atoms, or the radical 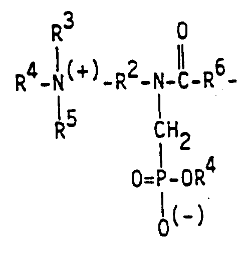 where R⁶ is an optionally OH-substituted divalent alkylene radical having 1 to 10 carbon atoms,
R² is a divalent hydrocarbon radical having 2 to 10 carbon atoms, whose chain can be interrupted by one or more nitrogen atoms,
R³ and R⁵ are identical or different and denote alkyl radicals having up to 20 carbon atoms or benzyl radicals and
R⁴ is an alkyl radical having 1 to 4 carbon atoms.

2. Phosphorus betaine according to Claim 1, characterized in that R¹ is an alkyl radical derived from a natural fatty acid or a mixture of natural fatty acids having, on average, 10 to 20 carbon atoms,
R³ and R⁵ are alkyl radicals and
R⁴ is an ethyl radical.

3. Process for the preparation of phosphorus betaines according to Claim 1 or 2, characterized in that compounds of the general formula 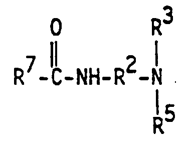 where R², R³ and R⁵ have the meaning already indicated and R⁷ is an optionally OH-substituted alkyl radical having 1 to 20 carbon atoms or the radical 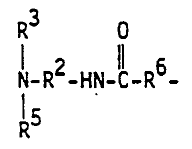 where R⁶ has the meaning already indicated,
and, relative to tertiary amino groups, at least equi-molar amounts of a compound of the general formula 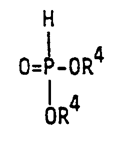 are dissolved or dispersed in a polar solvent, 1.5- to 2-molar amounts of formaldehyde are slowly added to the solution or dispersion, relative to tertiary amino groups, the reaction mixture is allowed to react at temperatures from about 60 to 140°C, the resulting water is separated in a manner known per se and, after reaction is complete, excess amounts of phosphorous ester and of formaldehyde, and also optionally the solvent, are removed by distillation, preferably at reduced pressure.

4. Use of the phosphorus betaines according to Claim 1 as surface-active substances, preferably for the treatment of polar surfaces in the industrial sector.

## Claims (Claims for the following Contracting State(s): ES)

1. Process for the preparation of phosphorus betaines of the general formula 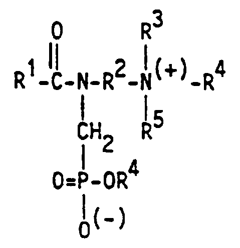 where
R¹ is an optionally OH-substituted alkyl radical having 1 to 20 carbon atoms, or the radical 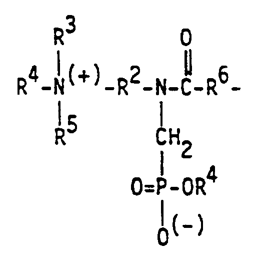 where R⁶ is an optionally OH-substituted divalent alkylene radical having 1 to 10 carbon atoms,
R² is a divalent hydrocarbon radical having 2 to 10 carbon atoms, whose chain can be interrupted by one or more nitrogen atoms,
R³ and R⁵ are identical or different and denote alkyl radicals having up to 20 carbon atoms or benzyl radicals and
R⁴ is an alkyl radical having 1 to 4 carbon atoms, characterized in that compounds of the general formula 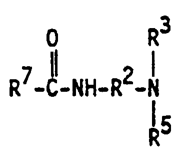
where R², R³ and R⁵ have the meaning already indicated and R⁷ is an optionally OH-substituted alkyl radical having 1 to 20 carbon atoms or the radical 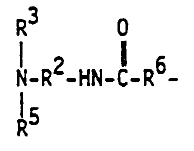 where R⁶ has the meaning already indicated,
and, relative to tertiary amino groups, at least equi-molar amounts of a compond of the general formula 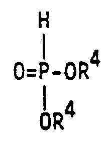 are dissolved or dispersed in a polar solvent, 1.5- to 2-molar amounts of formaldehyde are slowly added to the solution or dispersion, relative to tertiary amino groups, the reaction mixture is allowed to react at temperatures from about 60 to 140°C, the resulting water is separated in a manner known per se and, after reaction is complete, excess amounts of phosphorous ester and of formaldehyde, and also optionally the solvent, are removed by distillation, preferably at reduced pressure.

2. Process according to Claim 1, characterized in that compounds are reacted in which R⁷ is an alkyl radical derived from a natural fatty acid or a mixture of natural fatty acids having, on average, 10 to 20 carbon atoms, R³ and R⁵ are alkyl radicals and R⁴ is an ethyl radical.

3. The use of the phosphorus betaines prepared according to Claim 1 or 2 as surface-active substances, preferably for the treatment of polar surfaces in the industrial sector.

## Revendications (Revendications pour l'(les) Etat(s) contractant(s) suivant(s): AT, BE, CH, DE, FR, GB, IT, LI, NL)

1. Bétaïne phosphorée caractérisée par la formule générale 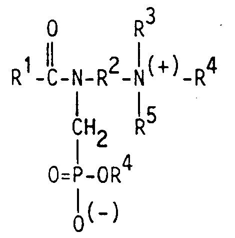 où
R¹ est un résidu alkyle éventuellement substitué par un groupe OH comportant 1 à 20 atomes de carbone ou le résidu 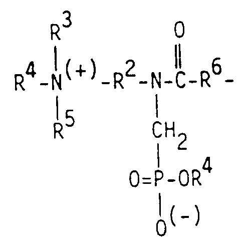 où R⁶ est un résidu alkyle bivalent éventuellement substitué par un groupement OH comportant 1 à 10 atomes de carbone,
R² est un résidu hydrocarbure bivalent comportant 2 à 10 atomes de carbone, dont la chaîne peut être coupée par un ou plusieurs atomes d'azote,
R³, R⁵ sont identiques ou différents l'un de l'autre et représentent des résidus alkyles comportant jusqu'à 20 atomes de carbone ou des résidus benzyle, et
R⁴ est un résidu alkyle comportant 1 à 4 atomes de carbone.

2. Bétaïne phosphorée selon la revendication 1, caractérisée en ce que
R¹ est un résidu alkyle dérivé d'un acide gras naturel ou d'un mélange d'acides gras naturels et comportant en moyenne 10 à 20 atomes de carbone,
R³ et R⁵ sont des résidus alkyles et
R⁴ est un résidu éthyle.

3. Procédé de préparation de bétaïnes phophorées selon la revendication 1 ou 2, caractérisé en ce que l'on dissout ou disperse dans un solvant polaire, les composés de formule générale 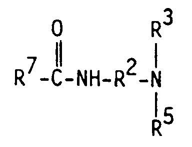 où R², R³ et R⁵ sont définis comme indiqué ci-dessus et R⁷ est un résidu alkyle éventuellement substitué par un groupe OH comportant 1 à 20 atomes de carbone ou le résidu 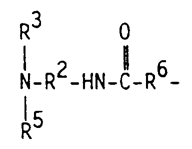 où R⁶ est défini comme indiqué ci-dessus, et des quantités au moins équimolaires par rapport à des groupes amino tertiaires d'un composé de formule générale 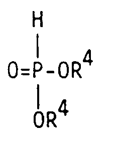 on ajoute lentement à la solution ou à la dispersion, du formaldéhyde, en quantité molaire de 1,5 à 2 par rapport à des groupes amino tertiaires, on laisse réagir le mélange réactionnel à des températures allant d'environ 60 à 140°C, on sépare de manière connue l'eau qui s'est formée, et une fois la réaction terminée, on élimine par distillation, de préférence sous pression réduite, les quantités d'ester de l'acide phosphoreux et de formaldéhyde en excédent, ainsi que de solvant, le cas échéant.

4. Utilisation des bétaïnes phosphorées, selon la revendication 1, comme substances tensio-actives, de préférence pour le traitement des surfaces polaires dans le domaine industriel.

## Revendications (Revendications pour l'(les) Etat(s) contractant(s) suivant(s): ES)

1. Procédé de préparation de bétaïnes phosphorées de formule générale 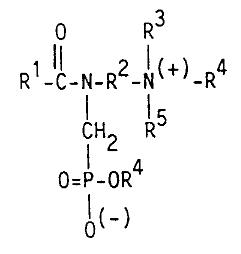 où
R¹ est un résidu alkyle éventuellement substitué par un groupe OH comportant 1 à 20 atomes de carbone ou le résidu 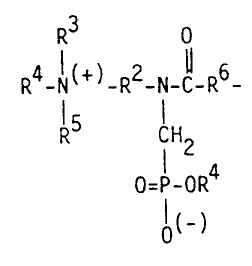 où R⁶ est un résidu alkyle bivalent éventuellement substitué par un groupement OH comportant 1 à 10 atomes de carbone,
R² est un résidu hydrocarbure bivalent comportant 2 à 10 atomes de carbone, dont la chaîne peut être coupée par un ou plusieurs atomes d'azote,
R³, R⁵ sont identiques ou différents l'un de l'autre et représentent des résidus alkyles comportant jusqu'à 20 atomes de carbone ou des résidus benzyle, et
R⁴ est un résidu alkyle comportant 1 à 4 atomes de carbone,
caractérisé en ce que l'on dissout ou disperse dans un solvant polaire, les composés de formule générale 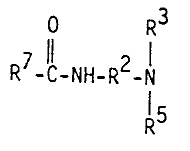 où R², R³ et R⁵ sont définis comme indiqué ci-dessus et R⁷ est un résidu alkyle éventuellement substitué par un groupe OH comportant 1 à 20 atomes de carbone ou le résidu 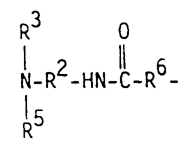 où R⁶ est défini comme indiqué ci-dessus,
et des quantités au moins équimolaires par rapport à des groupes amino tertiaires d'un composé de formule générale 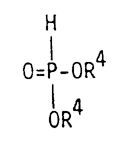 on ajoute lentement à la solution ou à la dispersion, du formaldéhyde, en quantité molaire de 1,5 à 2 par rapport à des groupes amino tertiaires, on laisse réagir le mélange réactionnel à des températures allant d'environ 60 à 140°C, on sépare de manière connue l'eau qui s'est formée, et une fois la réaction terminée, on élimine par distillation, de préférence sous pression réduite, les quantités d'ester de l'acide phosphoreux et de formaldéhyde en excédent, ainsi que de solvant, le cas échéant.

2. Procédé selon la revendication 1, caractérisé en ce que l'on fait réagir le composé, dans lequel, R⁷ est un résidu alkyle dérivé d'un acide gras naturel ou d'un mélange d'acides gras naturels et comportant en moyenne 10 à 20 atomes de carbone, R³ et R⁵ sont des résidus alkyles et R⁴ est un résidu éthyle.

3. Utilisation des bétaïnes phosphorées préparées selon la revendication 1 ou 2 , comme substances tensio-actives, de préférence pour le traitement des surfaces polaires dans le domaine industriel.
